(19) 

Europäisches
Patentamt
European
Patent Office
Office européen
des brevets

(11) **EP 2 940 687 A1**

(12) **EUROPEAN PATENT APPLICATION**

(43) Date of publication:
04.11.2015 Bulletin 2015/45

(51) Int Cl.:
*G10L 21/0272* $^{(2013.01)}$    *H04R 3/00* $^{(2006.01)}$
*H04S 7/00* $^{(2006.01)}$    *G10L 19/008* $^{(2013.01)}$

(21) Application number: 15001261.5

(22) Date of filing: 29.04.2015

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: 30.04.2014 US 201414265560

(71) Applicant: **Accusonus, Inc.**
**Lexington, MA 02421 (US)**

(72) Inventors:
• **Tsilfidis, Alexandros**
**11143 Athens (GR)**
• **Kokkinis, Elias**
**26442 Patras (GR)**

(74) Representative: **Von Rohr Patentanwälte**
**Partnerschaft mbB**
**Rüttenscheider Straße 62**
**45130 Essen (DE)**

(54) **METHODS AND SYSTEMS FOR PROCESSING AND MIXING SIGNALS USING SIGNAL
DECOMPOSITION**

(57)    A method for mixing, processing and enhancing signals using signal decomposition is presented. A method for improving sorting of decomposed signal parts using cross-component similarity is also provided.

**FIG. 1**

**Description**

The present invention relates to using signal decomposition methods for mixing or processing signals. Aspects of the invention relate to all fields of signal processing including but not limited to speech, audio and image processing, radar processing, biomedical signal processing, medical imaging, communications, multimedia processing, forensics, machine learning, data mining, etc.

When capturing sound for live concerts, studio recording sessions or other applications, multiple microphones can be typically used. Some of these microphones are dedicated at capturing sound coming from an individual sound source, namely the close microphones. Their name originates from the fact that they are set close to the desired source. In real-life applications, the close microphones cannot perfectly isolate the desired sound source and capture other simultaneous sounds too. This phenomenon is called microphone leakage, microphone bleed or microphone spill and it is a well-known problem to the sound engineers since the early days of sound capturing. In typical sound engineer setups, there can also be microphones aiming to capture sound coming from a plurality of sources; these are sometimes called ambient or room microphones.

Although microphones are initially set according to a specific acoustic setup, the acoustic conditions during sound capturing may change. For example microphones and/or sound sources sometimes move around the acoustic scene. In other cases, microphones and/or sources are accidentally displaced. In all above cases the original number of microphones and the initial microphone setup might not be sufficient from the sound engineering point of view. Therefore, there is a need for exploring the output of as many microphones as possible.

The characteristics of the captured sound mainly depend on the acoustic path between the microphone and each source, the microphone specifications (e.g. frequency response, microphone directivity, etc), the sound source properties, the room acoustic characteristics (when not in open spaces), etc. Therefore, each sound signal captured by each microphone (either close or ambient) is unique and from the signal processing point of view it has distinctive spectral and temporal properties. While processing and mixing sounds, a sound engineer takes advantage of these distinctive characteristics of each captured signal. The diversity of captured signals often allows for a successful final result. Therefore, careful microphone selection and placement as well as the decision on the number of microphones of each setup are very important in sound engineering.

The cost of professional microphones, the available space, the cabling infrastructure, the need to avoid acoustic feedback and other practical limitations reduce the number of microphones that can be practically used in real-world setups. On the other hand, the more microphones are set for sound capturing, the more options for the engineer when mixing or processing sound. Therefore there is a need for methods and systems that provide new ways of using every available microphone in a concert or studio setup.

Multiple microphones are also used in speech applications, typically in order to improve the performance of speech enhancement algorithms. These microphones are sometimes assembled in devices like mobile phones, tablets, laptop or desktop computers, wearables, smart TVs and other smart appliances, etc. Multiple microphones can be also found preinstalled into specific environments (e.g. smart homes, conference centers, meeting rooms, outdoors, etc) or become available via distributed microphone networks. In such cases, there is a need for methods and systems that provide new ways of taking into account every available microphone when enhancing speech, improving automatic speech recognition performance, etc.

Signal decomposition methods are a set of techniques that decompose a signal into its "intrinsic" parts and they are often used for the extraction of desired signals from a mixture of sound sources (i.e. source separation). In some cases signal decomposition can be performed with methods such as: non-negative matrix factorization, non-negative tensor factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, or tucker decomposition. Although there are single-channel signal decomposition methods, multi-channel approaches (where separation is performed in each or some of the available channels) can be beneficial. Such techniques can be applied in multichannel recordings resulting from multi-microphone setups of concerts and studio sessions, where high-quality sound processing is needed. In addition, there is a need to develop methods that fully take into account multichannel information when identifying the desired parts of decomposed signals. Overall, there is a need for improved multichannel signal decomposition methods and systems.

Object of the present invention is to improve processing or mixing or enhancing signal mixtures.

This object is achieved by a method according to claim 1 or 7, a non-transitory computer-readable information storage media according to claim 12, or a means according to claim 13. Advantageous embodiments are subject of the sub claims.

A first aspect of the present invention relates to a method of processing or mixing or enhancing signal mixtures comprising:

identifying one or more source signals in said signal mixtures;

detecting similar source signals on said mixture signals;

processing or mixing or enhancing one or more of said source signals as a group.

Preferably, said signal mixtures are single channel or binaural or multichannel audio signal mixtures.

Preferably, said signal mixtures are captured via a microphone.

Preferably, said source signals are extracted via any signal decomposition method.

Preferably, said decomposition method utilizes one or more of non-negative matrix factorization, non-negative tensor factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, or tucker decomposition.

Preferably, said source signals are combined with said signal mixtures

A further aspect of the present invention, which can be realized independently as well, relates to a method for selecting parts of decomposed digital signals comprising:

deriving a first similarity measure between said signal parts and said digital signals;

selecting one or more said signal parts based on said first similarity measure;

deriving a second similarity measure between said selected signal parts and said parts of decomposed signals;

selecting one or more said parts of decomposed signals based on said second similarity measure.

Preferably, said digital signals are single channel or binaural or multichannel audio signals.

Preferably, one or more of said digital signals are microphone signals.

Preferably, said first and second similarity measures are calculated from one or more filtered versions of said digital signals.

Preferably, said first and second similarity measures are calculated in one or more of the time domain, the frequency domain, the time-frequency domain.

A further aspect of the present invention, which can be realized independently as well, relates to one or more means for performing the steps of the above aspects.

A further aspect of the present invention which can be realized independently as well, relates to one or more means for performing the steps of the above aspects.

A further aspect of the present invention, which can be realized independently as well, relates to a non-transitory computer-readable information storage media, having stored thereon instructions, that when executed, cause to be performed a method for processing or mixing or enhancing signal mixtures comprising:

identifying one or more source signals in said signal mixtures;

detecting similar source signals on said mixture signals;

processing or mixing or enhancing one or more of said source signals as a group.

Aspects of the invention relate to a method of using signal decomposition outputs for mixing/processing/enhancing sound sources.

Aspects of the invention also relate to a method of sorting decomposed signals using available multichannel information.

Aspects of the invention also relate to a method of improving sorting of decomposed signals using the envelopes of said signals.

Preferably, aspects of the present invention can be realized independently and in various combinations.

For a more complete understanding of the invention, reference is made to the following description and accompanying drawings, in which:

FIG. 1 illustrates an exemplary schematic representation of a method for capturing/processing/mixing sound;

FIG. 2 illustrates an exemplary schematic representation of a method for multichannel signal decomposition;

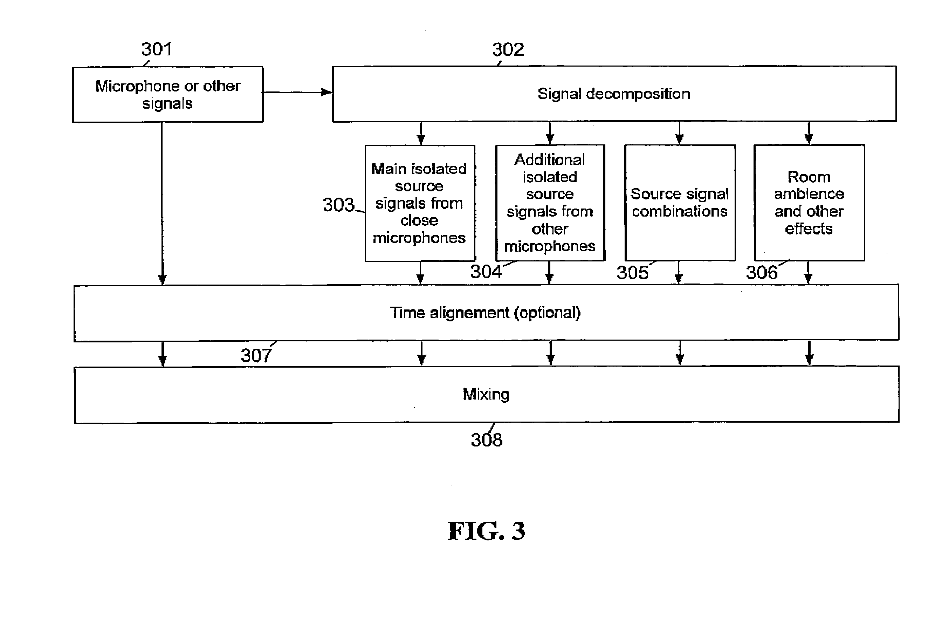

FIG. 3 illustrates an exemplary schematic representation of a method that explores signal decomposition for enhancing/mixing/processing signals;

FIG. 4 illustrates an exemplary schematic representation of a mixing/processing method implemented by a standalone application and a Digital Audio Workstation;

FIG. 5 illustrates an exemplary schematic representation of a mixing/processing method implemented in a console/mixer;

FIG. 6 illustrates an exemplary schematic representation of a method for advanced routing of audio signals;

FIG. 7 illustrates an exemplary schematic representation of a method for processing selected parts of input signals;

FIG. 8 illustrates an exemplary schematic representation of a method of sorting signals by exploring cross-component similarity measures; and

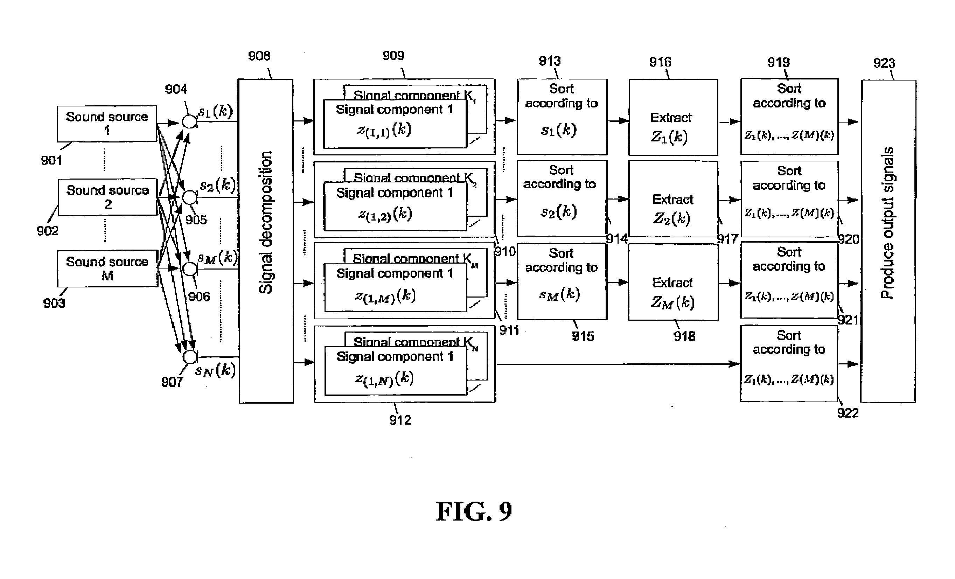

FIG. 9 illustrates an exemplary schematic representation of a method of sorting signals when multichannel information is available.

FIG. 10 illustrates an exemplary schematic representation of a processing method based on decomposition;

FIG. 11 illustrates an exemplary schematic representation of the creation of an extended spectrogram using a training sequence, in accordance with embodiments of the present invention;

FIG. 12 illustrates an example of a source signal along with a function that is derived from an energy ratio, in accordance with embodiments of the present invention;

FIG. 13 illustrates an exemplary schematic representation of a set of source signals and a resulting initialization matrix in accordance with embodiments of the present invention;

FIG. 14 illustrates an exemplary schematic representation of a block diagram showing a NMF decomposition method, in accordance with embodiments of the present invention; and

FIG. 15 illustrates an exemplary schematic representation of a user interface in accordance with embodiments of the present invention.

Hereinafter, embodiments of the present invention will be described in detail in accordance with the references to the accompanying drawings. It is understood that other embodiments may be utilized and structural changes may be made without departing from the scope of the present application.

The exemplary systems and methods of this invention will sometimes be described in relation to audio systems. However, to avoid unnecessarily obscuring the present invention, the following description omits well-known structures and devices that may be shown in block diagram form or otherwise summarized.

For purposes of explanation, numerous details are set forth in order to provide a thorough understanding of the present invention. It should be appreciated however that the present invention may be practiced in a variety of ways beyond the specific details set forth herein. The terms determine, calculate and compute, and variations thereof, as used herein are used interchangeably and include any type of methodology, process, mathematical operation or technique.

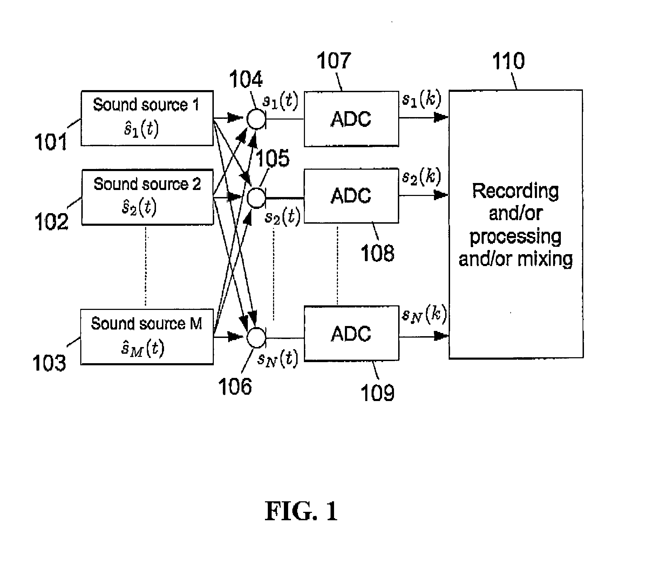

FIG 1 illustrates an exemplary case where any number of microphones **104, 105, ..., 106** can be used to capture any number of sound sources **101, 102, ..., 103**. The number of microphones (N) can be lower, equal or higher to the number of sound sources (M). Preferably, M and/or N are natural numbers, in particular wherein M and/or N is or are at least two or higher. Note that microphone signals are signal mixtures, since microphones capture all simultaneous sound sources. A number of Analog to Digital Converters (ADCs) **107, 108, ..., 109** can be used to convert the analog domain signals to the digital domain. The discrete signals can be then used for recording and/or mixing and/or processing **110**. In some embodiments, the microphone signals can be also processed/altered in the analog domain before being fed into the ADCs.

In an exemplary sound engineering scenario, M sound sources are denoted with $\hat{s}_1(t)$, $\hat{s}_2(t)$, ..., $\hat{s}_M(t)$, where t is the continuous time index. These may refer to any sound source such as musical instruments, singers or other performers, noise sources, etc. The sound sources are captured by N microphones producing the corresponding analog domain microphone signals $s_1(t)$, $s_2(t)$, ..., $s_N(t)$. These processed or unprocessed signals can be transformed in the digital domain using, preferably at least one, two, M, N, multiple, a natural number and/or an arbitrary number of ADCs, producing the corresponding discrete domain signals: $s_1(k)$, $s_2(k)$ $s_N(k)$, where k represents the discrete time index. The ADCs can be placed in any device, including but not limited to the microphones, the mixing desk, external hardware etc. After obtaining the discrete signals, the sound engineer can proceed with the task at hand, for example processing and/or mixing.

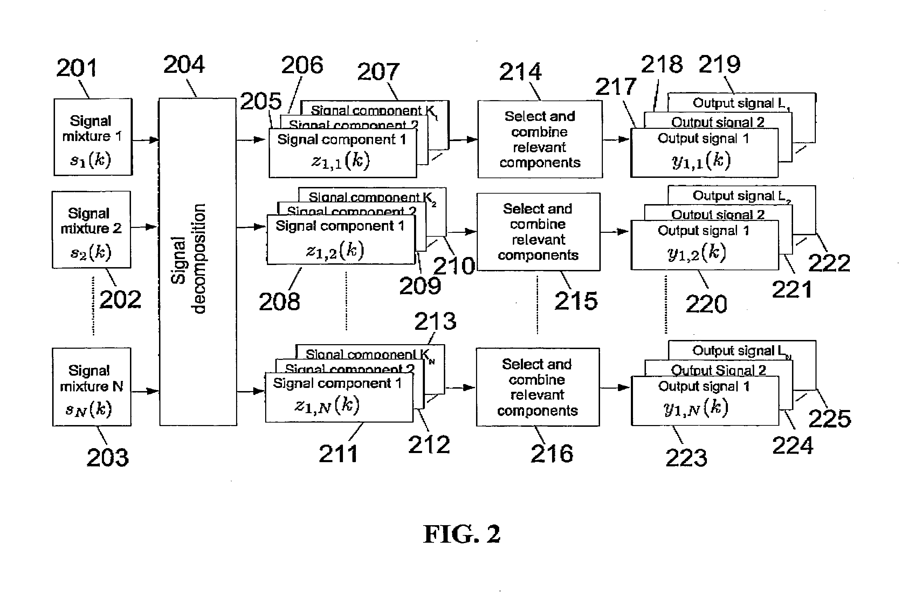

In FIG 2, an exemplary illustration of a decomposition of multiple input signals is presented. The term input signal, may refer to any digital signal or signal mixture and here it can also refer to a microphone signal in the discrete domain. A signal mixture can be defined as the sum of one ore more signals. A number of N input signals **201, 202,..., 203** is decomposed via any signal decomposition method **204**. In a particular embodiment each input signal can be decomposed separately. In other embodiments, a group of the input signals or all the signals can be combined and decomposed simultaneously. Signal decomposition can be used as a tool to perform other signal processing tasks including but not limited to source separation, signal restoration, signal enhancement, noise removal and any form of signal mixing including but not limited to un-mixing, up-mixing, re-mixing, etc. After decomposition, each input signal is analyzed into a number of "intrinsic parts" or components **205, 206, ..., 207** and **208, 209, ..., 210** and **211, 212, ..., 213.** As explained in the related application Ser. No. 14/011,981, a component can be any part of the original input signal. The aforementioned components of each input signal are then selected and combined **214**, **215, 216** and a number of output signals is produced **217, 218,..., 219,** and **220, 221, ..., 222** and **223, 224, ..., 225.**

In an exemplary embodiment, we consider a signal mixture captured from a microphone (see for example microphone **104** of FIG 1). This signal captured from microphone **104** can be given by the equation:

$$s_1(t) = \Psi_1(\hat{s}_1(t)) + \Psi_2(\hat{s}_2(t)) + \dots + \Psi_M(\hat{s}_M(t))\dots\dots\dots(1)$$

where the operators $\psi_{1,2,..,M}$ denote any transformations altered in any way the original sound of the sound sources, while propagating between each source and microphone **104**. In particular embodiments, the sources and the microphones are located in a closed space and the operators $\Psi_{1,2,..,M}$ can denote convolutions with the corresponding room impulse responses. In other embodiments, the microphones and the sources can be in an open space and the operators $\Psi_{1,2,..,M}$ denote filtering operations mainly representing the gain reduction due to source-receiver distance and the major reflections from nearby surfaces. The operators $\Psi_{1,2,..,M}$ can also denote the effect of sound source directivity, microphone directivity and frequency response, etc.

In prior art, it is typically considered that the ideal output of a close microphone is the isolated signal coming from the sound source that one desires to capture. Under this assumption, microphone **104** would ideally capture only the sound of source **101** (FIG 1), i.e.:

$$s_1(t) = \Psi_1(\hat{s}_1(t)) \approx \hat{s}_1(t)\dots\dots\dots(2)$$

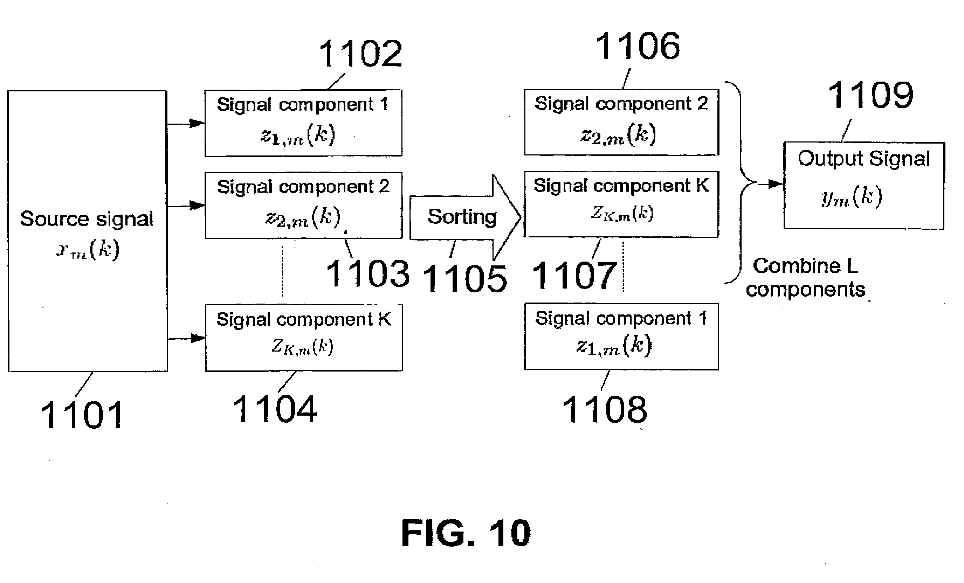

Due to obvious physical limitations, capturing an isolated source is not practically possible. However, referring to Fig. 10 to 15 or US 2015/0066486 A1 based on the related US application with Ser. No. 14/011,981 decomposition methods for isolating the desired sound source via signal processing are presented.

In an embodiment of the present application a method for further exploring microphone signals using signal decomposition is presented. The method is valid for any type of microphone including but not limited to close microphones, ambient microphones, room microphones, etc. The method takes advantage of the fact that each microphone captures not only the source of interest, but also any other sound source that is active at the same time. For example, Equation 1 shows that the sound captured from microphone 1 contains not only a filtered version of the source of interest **101,** but also filtered versions of all other M-1 sources **102, ..., 103** in the form of microphone leakage. Therefore using signal decomposition, multiple signal outputs can be created from each input signal. By doing this, one can obtain multiple versions of each input signal from the sound captured by each microphone.

In FIG. 2, let's assume that $s_1(k)$, $s_2(k)$, ..., $s_N(k)$ are microphone signals that capture N input sources denoted with $\hat{s}_1(k)$, $\hat{s}_2(k)$, ..., $\hat{s}_N(k)$ and $\Psi_{1,1..N}$ are the operators denoting any transformation due to the source-microphone acoustic paths. Each microphone signal can produce many output signals, each one related to one of the input sources. For example, the following outputs can be produced from microphone signal 1:

$$y_{1,1}(k) \approx \Psi_{1,1}(\hat{s}_1(k))\dots\dots\dots(3)$$

$$y_{1,2}(k) \approx \Psi_{1,2}(\hat{s}_2(k)) \ldots\ldots\ldots(4)$$

$$\vdots$$

$$y_{1,N}(k) \approx \Psi_{1,N}(\hat{s}_N(k)) \ldots\ldots\ldots(5)$$

Note that sometimes it's impossible to produce a good estimation of every input signal from each microphone signal. In such cases the output signals may contain any combination and/or transformation of the input signals.

In a particular embodiment, a sound engineer can take advantage of multiple output signals in order to enhance/mix/process the sound of a specific input source. For example, let's assume that the desired sound for input source signal 1 is denoted by $S_l(k)$. Then, $S_l(k)$ can be obtained by mixing the original microphone signal $s_1(k)$ with decomposed output signals from all microphones:

$$S_1(k) = F_1(s_1(k)) + F_2(y(1,1)) + \ldots + F_{N+1}(y(N,1)) \ldots\ldots\ldots(6)$$

where the operators $F_1$, $F_2$, ..., $F_{N+1}$ account for any linear or non-linear post-processing. By performing the appropriate substitutions in Equation 6, it can be seen that $S_1(k)$ is derived using all available versions of sound signal $s_1(k)$:

$$S_1(k) = F_1(s_1(k)) + F_2(\Psi_{1,1}(\hat{s}_1(k))) + \ldots + F_{N+1}(\Psi_{N,1}(\hat{s}_1(k))) \ldots\ldots\ldots(7)$$

Note that depending on the application, several terms of the Equations 6 and 7 can be ignored in the final mix (i.e. some of the operators $F_1$, $F_2$, ..., $F_{N+1}$ can be set to 0),

In other embodiments, output signals from decomposition are not only used to enhance one or more input signals but also to provide more mixing/processing options. In a particular embodiment a plurality of microphone or other signals **301** are decomposed via any decomposition method **302**. Several output signals can be produced, using the individual signal components extracted by the decomposition stage, including but not limited to:

- The isolated sound sources can be extracted from the corresponding close microphones **303**.

- The sound of each source can be extracted from any microphone that captured said source **304**.

- Any useful combinations of the active sound sources that can be extracted from the microphone signals **305**.

- The room ambience or other effects such as the input signals' transients, the harmonic parts of the sound sources, the ambient noise, etc. **306**.

When capturing signals with multiple microphones, the time-of-arrival will vary due to differences in source-receiver distances. When mixing or adding microphone signals this phenomenon causes an effect known as comb filtering. Therefore, an optional time-alignment stage that synchronizes the input signals and the decomposition outputs and ameliorates the comb filtering effect can be added **307**. Finally, mixing/processing of the captured sounds can be done manually or automatically **308**. Note that the signal decomposition stage can be either implemented in real-time or offline. Although in prior art microphone leakage is considered to cause significant problems in sound engineering, the present embodiment not only overcomes the problem but also uses leakage in an advantageous way for the mixing process.

In a particular embodiment, the method can be implemented using software inside a Digital Audio Workstation (DAW) program. The input signals can be loaded into separate tracks of the DAW and decomposition of a group (or all) of the signals can be performed. The user can optionally choose which signals to decompose or they can be selected automatically. The decomposition stage can be single- or multi-channel and it can be performed offline or in real-time. After the decomposition, output signals are produced and can be optionally time-aligned. Then they can become available for further processing/mixing inside the DAW.

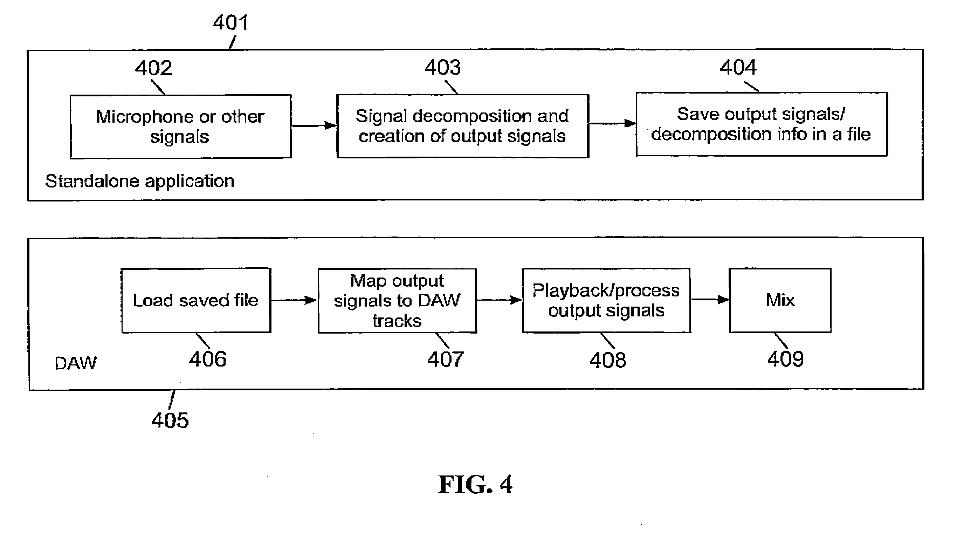

In another embodiment, the method can be implemented in software, using a standalone application and a DAW (FIG 4). The standalone application **401** can load the input signals **402** and perform signal decomposition **403**. The decomposition components and/or decomposition outputs and/or any decomposition related info can be saved in a file that can be also used outside the standalone application **404.** Then, the file can be loaded in a DAW **405.** For this step, a software plugin can be used. When reading this file **406,** decomposition components and/or decomposition outputs and/or any decomposition related info are available inside the DAW. A mapping of the decomposition-related signals to specific DAW tracks can be done either automatically or by the user **407.** Then the aforementioned signals can be played back/processed inside the DAW **408** and used together with the original input signals for mixing and further processing **409.**

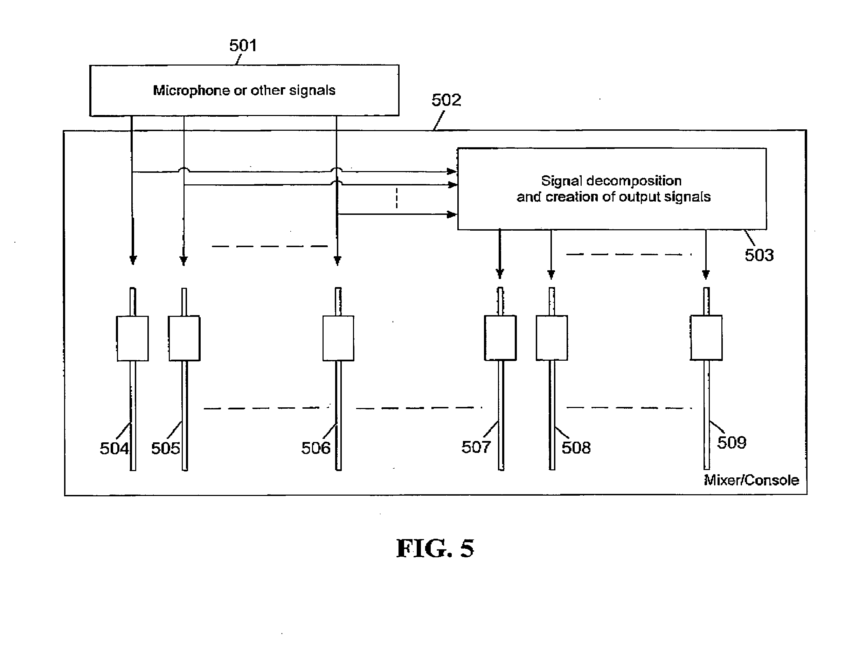

In another embodiment, the method can be implemented in hardware or in software inside a mixer/console **502** (FIG 5). In a typical setup, microphone signals or any other sound signals **501** are fed into different channels of the mixer **504, 505, ..., 506** for processing/mixing. In the present embodiment, a signal decomposition stage is added, resulting to the creation of output signals **503.** This stage can be implemented in hardware or in software and it can be integrated inside the mixer or in any device. The output signals of the decomposition stage **503** are then fed into channels of the mixer **507, 508, ..., 509** and they become available for further processing/mixing together with the original signals **501.**

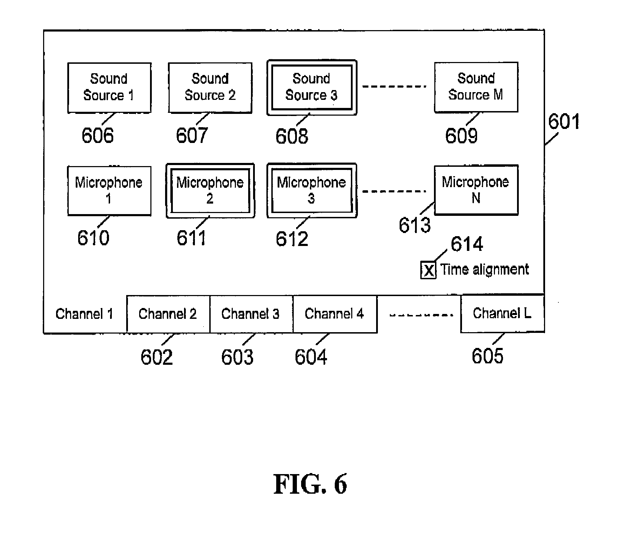

In another embodiment, an advanced signal routing method can be implemented using the output signals from the signal decomposition stage (FIG. 6). A user can select different routing configurations for each mixing channel (or bus) **601, 602, 603, 604, ..., 605.** Then using an appropriate interface, the user can select the corresponding sound sources **606, 607, 608, ..., 609** and microphones **610, 611, 612, ..., 613.** In FIG 6 for example, sound source 3 as captured in microphones 2 and 3 is routed in channel 1. Note that a time-alignment option **614** can be also given to the user. The above interface that gives the means to route specific sources from each microphone can be implemented in any software or hardware form.

In another embodiment, a method can be implemented specifically for drum microphone signals. Microphone leakage is prominent in drum sound capturing, since (i) a large number of microphones is needed and (ii) due to space restrictions and the nature of the drum kit as an instrument it's not possible to set the microphones far away from each other. In such cases, drum microphone signals can be decomposed via any signal decomposition method. Then, output signals containing each isolated drum sound can be extracted from each microphone signal, as well as drum groups and other effects. The output signals can be used together with the original microphone signals to enhance the individual drum sounds and/or to improve the whole drum mix.

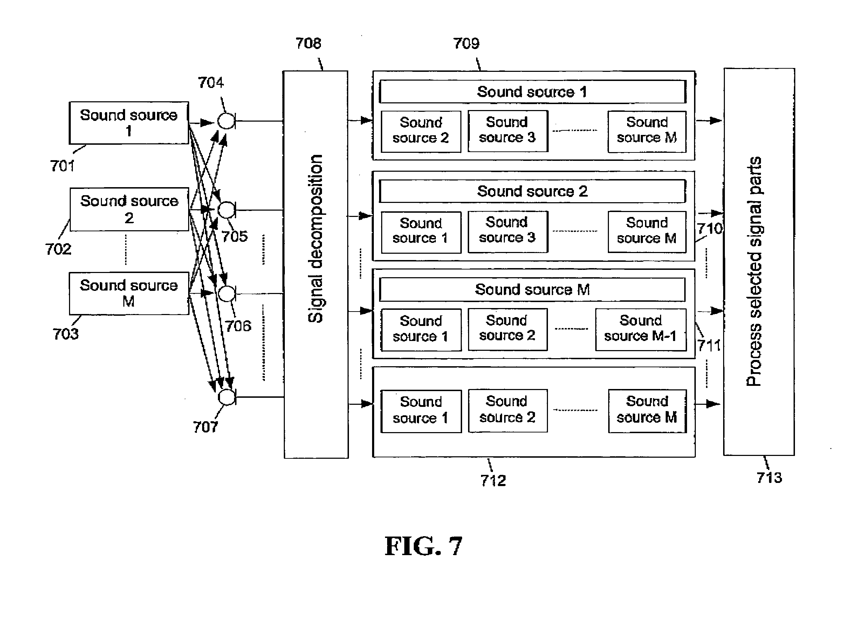

In a particular embodiment (FIG 7), M sound sources **701, 702, ..., 703** are captured from any number of microphones **704, 705, 706, ..., 707.** Then a signal decomposition method is applied **708** in order to identify the contribution of each sound source in each microphone **709, 710, ...,711, ...,712.** Contrary to the previous embodiments, in this example it's not necessary to decompose the microphone signals to the original sound sources (although this approach can be also followed). Instead, all or some of the signal parts that correspond to a specific sound source can be processed/mixed together **713** without separating the signals. For example, let's assume that sound source 1 corresponds to an acoustic guitar and that microphone **704** is the corresponding close microphone. Using prior art, when a sound engineer wants to add a sound effect to the guitar sound she/he would have applied the effect to the output of microphone **704.** Using the present embodiment, if a sound engineer wants to add a sound effect to the guitar sound, she/he has the option to apply the effect to any part of sound source 1 as captured from all microphones (e.g. sound source 1 from **709, 710, ...,711, ...,712).**

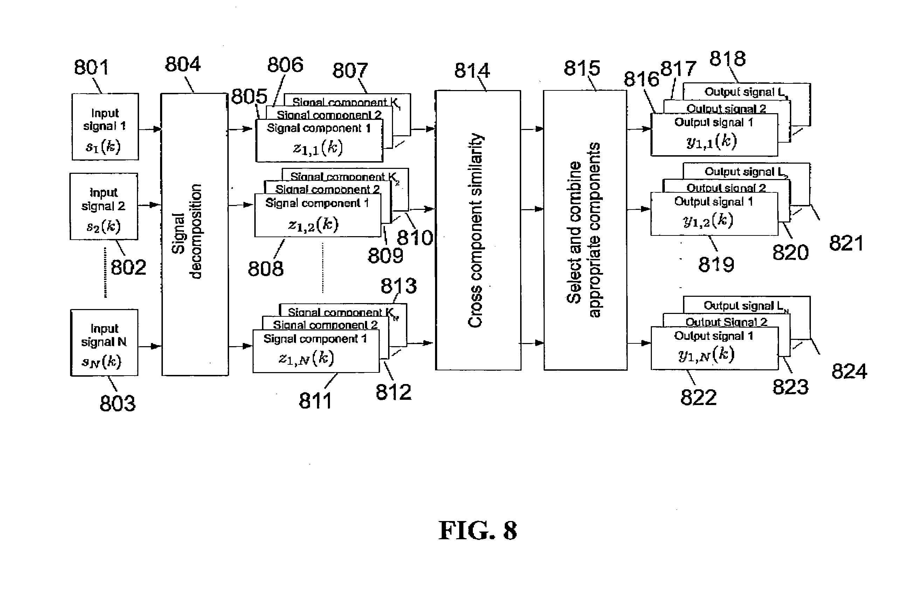

In another embodiment, a cross-component similarity technique is applied in order to select the components that form the output signals (FIG. 8). For measuring similarity, any function or relationship that compares the corresponding signals can be used. A number of input signals **801, 802,..., 803** are fed into a signal decomposition method **804.** Then a number of signal components $z_{K=,}N(k)$ are extracted from each input signal. For example, components **805, 806,** ..., **807** are extracted from input signal **801,** components **808, 809,** ..., **810** are extracted from input signal **802** and components **811, 812, ..., 813** are extracted from input signal **803.** Then cross component similarities are investigated and the multichannel information is taken into account **814** in order to select and combine appropriate components **815.** The selection and combination of components **815** can be either user-assisted or automatic. Then a number of output signals is produced **816, 817, ..., 818** and **819, 820,** ..., **821** and **822, 823, ..., 824.**

It is typical to use sorting techniques in order to select appropriate components that form the output signals. Such techniques are for example described referring to Fig. 10 to 15 or US 2015/0066486 A1 based on the related US application with Ser. No. 14/011,981 and typically investigate any form of similarity between the extracted components and the corresponding input signal. For example, a typical measure for exploring the similarity of extracted components and the corresponding input signal is the cosine similarity.

In a particular embodiment of the present application, it is instead proposed to investigate any cross-component similarity and explore the available close-microphone multichannel information. In a particular setup, we may have M sound sources **901, 902, ..., 903** captured by N microphones (N>M) **904, 905,..., 906,..., 907** and some of the sources have a dedicated close microphone **904, 905, .., 906.** Assuming an analog to digital conversion stage after sound capturing, the microphone input signals can be represented in the discrete time domain as $s_1(k), s_2(k), ..., s_M(k), ..., s_N(k)$. After signal decomposition **908,** corresponding signal components $z_{j,m}(k)$ (j denotes the number of component and m denotes the input signal number) are produced for each microphone signal **909, 910, ..., 911, ..., 912.** Then the signal components of the close microphones are sorted via any appropriate sorting technique, including but not limited to those described in the related application Ser. No. 14/011,981 **913, 914, ..., 915.** Since each close microphone has a related source signal and it contains significant energy of this signal, the sorting procedure can reveal the components relevant to each microphone's related source $Z_m(k)$ **916**, **917**, ..., **918**. Alternatively, $Z_m(k)$ can be defined manually by a user or via an appropriate graphical interface. Then, any cross-component similarity measure between $Z_1(k)$, ..., $Z_M(k)$ and $z_{j,m}(k)$ can be derived **919, 920, ..., 921, ...., 922.** For producing the output signals, any technique can be used **923.** For example a threshold of similarity T can be defined and:

- When the calculated similarity is higher than T, the components are assumed to correspond to the sound of the related source.

- When the calculated similarity measure is lower than T, the components are assumed to correspond to the sound of any other source.

Alternatively, only the component with the largest similarity value can be assumed to belong to the related source. Alternatively, the components can be sorted and a user can select among them in order to produce the output signals. In some embodiments, particular sources or combination of sources can be identified and exported as output signals. In other embodiments particular sources can be identified in order to be excluded from certain output signals,

In particular embodiments, similarity measures or clustering techniques can be applied directly on the time domain signals or the signals can be transformed via any transform. For example, the signals can be transformed in the time-frequency domain using any relevant technique such as a short-time Fourier transform (STFT), a wavelet transform, a polyphase filterbank, a multi rate filterbank, a quadrature mirror filterbank, a warped filterbank, an auditory-inspired filterbank, etc. In another embodiment, similarity measures or clustering techniques can be applied on the envelope of the signals. The signal envelope can be calculated via any appropriate technique such as low-pass filtering, Hilbert transform, etc. Using the envelope of the signals can be advantageous in multi-microphone setups. In these cases, the frequency content of the captured sound sources may differ significantly when comparing one microphone signal to the other; however the coarse time-domain content of the sound sources presents higher similarity and this can improve the accuracy of the results.

While the above-described flowcharts have been discussed in relation to a particular sequence of events, it should be appreciated that changes to this sequence can occur without materially effecting the operation of the invention. Additionally, the exemplary techniques illustrated herein are not limited to the specifically illustrated embodiments but can also be utilized and combined with the other exemplary embodiments and each described feature is individually and separately claimable.

Additionally, the systems, methods and protocols of this invention can be implemented on a special purpose computer, a programmed micro-processor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can be used to implement the various communication methods, protocols and techniques according to this invention.

Furthermore, the disclosed methods may be readily implemented in software using object or object-oriented software development environments that provide portable source code that can be used on a variety of computer or workstation platforms. Alternatively the disclosed methods may be readily implemented in software on an embedded processor, a micro-processor or a digital signal processor. The implementation may utilize either fixed-point or floating point operations or both. In the case of fixed point operations, approximations may be used for certain mathematical operations such as logarithms, exponentials, etc. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The systems and methods illustrated herein can be readily implemented in hardware and/or software using any known or later developed systems or structures, devices and/or software by those of ordinary skill in the applicable art from the functional description provided herein and with a general basic knowledge of the audio processing arts.

Moreover, the disclosed methods may be readily implemented in software that can be stored on a storage medium, executed on programmed general-purpose computer with the cooperation of a controller and memory, a special purpose computer, a microprocessor, or the like. In these instances, the systems and methods of this invention can be implemented as program embedded on personal computer such as an applet, JAVA.RTM. or CGI script, as a resource residing on a server or computer workstation, as a routine embedded in a dedicated system or system component, or the like. The system can also be implemented by physically incorporating the system and/or method into a software and/or hardware system, such as the hardware and software systems of an electronic device.

It is therefore apparent that there has been provided, in accordance with the present invention, systems and methods for improved signal decomposition in electronic devices. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Preferably, the term software is also referred to as computer program product or can be replaced with the term computer program product or vice versa.

In the following optional section referring to FIG 10 to 15, optional additional features and aspects regarding improved signal decomposition are described in detail, which can be applied to and/or used in addition to and/or for detail understanding of previous aspects of the present invention,

Further, in the following optional section variables and/or indices of the previous section might be used again in the same or different context Thus, these variables and/or indices used in the following section can but do not necessarily correspond to or comply with variables and/or indices of the previous section.

In particular, variables $s$ and $\hat{s}$ are used in different context in the previous and in the following section.

In particular, if necessary for clarity reasons,

variable/index $s$ of the following section can be replaced with variable/index $o$, and/or

variable/index $\hat{s}$ of the following section can be replaced with variable/index $\hat{o}$, and/or

variable/index $M$ of the following section can be replaced with variable/index $D$, and/or

variable/index $m$ of the following section can be replaced with variable/index $d$, and/or

variable/index $N$ of the following section can be replaced with variable/index $G$, and/or

variable/index $n$ of the following section can be replaced with variable/index $g$, and/or

variable/index $K$ of the following section can be replaced with variable/index $H$, and/or

variable/index $T$ of the following section can be replaced with variable/index $I$.

For example, $s_n(k)$ can be replaces with $o_n(k)$ and so on.

Optionally, one or more sound sources $\hat{s}$ (in particular $\hat{s}_1(t)$, $\hat{s}_2(t)$, ... $\hat{s}_M(t)$) of the previous section of the description might comply with or correspond to one or more active signals $s$ (in particular $s_n(k)$) of the following section of the description, which preferably are therefore replaceable.

Optionally, one or more microphone signals or corresponding discrete domain signals $s$ (in particular $s_1(t)$, $s_2(t)$ ... $s_N(t)$ and/or $s_1(k)$, $s_2(k)$ ... $s_N(k)$) of the previous section of the description might correspond to or comply with one or more source signals $x$ (in particular $x_1(k)$, $x_2(k)$ ... $x_M(k)$) of the following section of the description, which preferably are therefore replaceable.

Optionally, a number $M$ of sound sources $\hat{s}$ (in particular $\hat{s}_1(t)$, $\hat{s}_2(t)$, ... $\hat{s}_M(t)$) of the previous section of the description might comply with or correspond to a number $N$ of sound sources $s$ (in particular $s_n(k)$ and/or $s_1(k)$, $s_2(k)$ ... $s_N(k)$) of the following section, which preferably are therefore replaceable.

Optionally, a number $N$ of microphones of the previous section of the description might comply with or correspond to a number $M$ of microphones of the following section, which preferably are therefore replaceable.

Optionally, training sequence $\hat{s}$ (in particular $\hat{s}_1(k)$) of the following section of the description is related to one or more microphone signals or corresponding discrete domain signals $s$ (in particular $s_1(t)$, $s_2(t)$ ... $s_N(t)$ and/or $s_1(k)$, $s_2(k)$ ... $s_N(k)$) of the previous section of the description.

Optionally, component signal $z$ (in particular $z_{j,m}(k)$) of the previous section of the description might comply with or correspond to signal component $z$ (in particular $z_{j,m}(k)$) of the following section, which preferably are therefore replaceable.

Optionally, output $y$ (in particular $y_{1,1}(k)$ ... $y_{1,N}(k)$) of the previous section of the description might comply with or correspond to output $y$ (in particular $y_m$ and/or $y_1$ ... $y_M$) of the following section, which preferably are therefore replaceable.

In signal processing applications, it is commonplace to decompose a signal into parts or components and use all or a subset of these components in order to perform one or more operations on the original signal. In other words, decomposition techniques extract components from signals or signal mixtures. Then, some or all of the components can be combined in order to produce desired output signals. Factorization can be considered as a subset of the general decomposition framework and generally refers to the decomposition of a first signal into a product of other signals, which when multiplied together represent the first signal or an approximation of the first signal.

Signal decomposition is often required for signal processing tasks including but not limited to source separation, signal restoration, signal enhancement, noise removal, un-mixing, up-mixing, re-mixing, etc. As a result, successful signal decomposition may dramatically improve the performance of several processing applications. Therefore, there is a great need for new and improved signal decomposition methods and systems.

Since signal decomposition is often used to perform processing tasks by combining decomposed signal parts, there are many methods for automatic or user-assisted selection, categorization and/or sorting of said parts. By exploiting such selection, categorization and/or sorting procedures, an algorithm or a user can produce useful output signals. Therefore there is a need for new and improved selection, categorization and/or sorting techniques of decomposed signal parts. In addition there is a great need for methods that provide a human user with means of combining such decomposed signal parts.

Source separation is an exemplary technique that is mostly based on signal decomposition and requires the extraction of desired signals from a mixture of sources. Since the sources and the mixing processes are usually unknown, source separation is a major signal processing challenge and has received significant attention from the research community over the last decades. Due to the inherent complexity of the source separation task, a global solution to the source separation problem cannot be found and therefore there is a great need for new and improved source separation methods and systems.

A relatively recent development in source separation is the use of non-negative matrix factorization (NMF). The performance of NMF methods depends on the application field and also on the specific details of the problem under examination. In principle, NMF is a signal decomposition approach and it attempts to approximate a non-negative matrix **V** as a product of two non-negative matrices **W** (the basis matrix) and **H** (the weight matrix). To achieve said approximation, a distance or error function between **V** and W**H** is constructed and minimized. In some cases, the matrices **W** and **H** are randomly initialized. In other cases, to improve performance and ensure convergence to a meaningful and useful factorization, a training step can be employed (see for example Schmidt, M., & Olsson, R. (2006). "Single-Channel Speech Separation using Sparse Non-Negative Matrix Factorization", Proceedings of Interspeech, pp. 2614-2617 and Wilson, K. W., Raj, B., Smaragdis, P. & Divakaran, A. (2008), "Speech denoising using nonnegative matrix factorization with priors," IEEE International Conference on Acoustics, Speech and Signal Processing, pp. 4029-4032). Methods that include a training step are referred to as supervised or semi-supervised NMF. Such training methods typically search for an appropriate initialization of the matrix **W**, in the frequency domain. There is also, however, an opportunity to train in the time domain. In addition, conventional NMF methods typically initialize the matrix **H** with random signal values (see for example Frederic, J, "Examination of Initialization Techniques for Nonnegative Matrix Factorization" (2008). Mathematics Theses. Georgia State University). There is also an opportunity for initialization of **H** using multichannel information or energy ratios. Therefore, there is overall a great need for new and improved NMF training methods for decomposition tasks and an opportunity to improve initialization techniques using time domain and/or multichannel information and energy ratios.

Source separation techniques are particularly important for speech and music applications. In modem live sound reinforcement and recording, multiple sound sources are simultaneously active and their sound is captured by a number of microphones. Ideally each microphone should capture the sound of just one sound source. However, sound sources interfere with each other and it is not possible to capture just one sound source. Therefore, there is a great need for new and improved source separation techniques for speech and music applications.

Aspects of the invention relate to training methods that employ training sequences for decomposition.

Aspects of the invention also relate to a training method that performs initialization of a weight matrix, taking into account multichannel information.

Aspects of the invention also relate to an automatic way of sorting decomposed signals.

Aspects of the invention also relate to a method of combining decomposed signals, taking into account input from a human user.

Hereinafter, embodiments of the present invention will be described in detail in accordance with the references to the accompanying drawings. It is understood that other embodiments may be utilized and structural changes may be made without departing from the scope of the present application.

The exemplary systems and methods of this invention will sometimes be described in relation to audio systems. However, to avoid unnecessarily obscuring the present invention, the following description omits well-known structures and devices that may be shown in block diagram form or otherwise summarized.

For purposes of explanation, numerous details are set forth in order to provide a thorough understanding of the present invention. It should be appreciated however that the present invention may be practiced in a variety of ways beyond the specific details set forth herein. The terms determine, calculate and compute, and variations thereof, as used herein are used interchangeably and include any type of methodology, process, mathematical operation or technique.

FIG 10 illustrates an exemplary case of how a decomposition method can be used to apply any type of processing. A source signal 1101 is decomposed in signal parts or components 1102, 1103 and 1104. Said components are sorted 1105, either automatically or manually from a human user. Therefore the original components are rearranged 1106, 1107, 1108 according to the sorting process. Then a combination of some or all of these components forms any desired output 1109. When for example said combination of components forms a single source coming from an original mixture of multiple sources, said procedure refers to a source separation technique. When for example residual components represent a form of noise, said procedure refers to a denoise technique. All embodiments of the present application may refer to a general decomposition procedure, including but not limited to non-negative matrix factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, tucker decomposition, etc.

In an exemplary embodiment, a non-negative matrix factorization algorithm can be used to perform decomposition, such as the one described in FIG 10. Consider a source signal $x_m(k)$, which can be any input signal and k is the sample index. In a particular embodiment, a source signal can be a mixture signal that consists of N simultaneously active signals $s_n(k)$. In particular embodiments, a source signal may always be considered a mixture of signals, either consisting of the intrinsic parts of the source signal or the source signal itself and random noise signals or any other combination thereof In general, a source signal is considered herein as an instance of the source signal itself or one or more of the intrinsic parts of the source signal or a mixture of signals.

In an exemplary embodiment, the intrinsic parts of an image signal representing a human face could be the images of the eyes, the nose, the mouth, the ears, the hair etc. In another exemplary embodiment, the intrinsic parts of a drum snare sound signal could be the onset, the steady state and the tail of the sound. In another embodiment, the intrinsic parts of a drum snare sound signal could be the sound coming from each one of the drum parts, i.e. the hoop/rim, the drum head, the snare strainer, the shell etc. In general, intrinsic parts of a signal are not uniquely defined and depend on the specific application and can be used to represent any signal part.

Given the source signal $x_m(k)$, any available transform can be used in order to produce the non-negative matrix $\mathbf{V}_m$ from the source signal When for example the source signal is non-negative and two-dimensional, $\mathbf{V}_m$ can be the source signal itself. When for example the source signal is in the time domain, the non-negative matrix $\mathbf{V}_m$ can be derived through transformation in the time-frequency domain using any relevant technique including but not limited to a short-time Fourier transform (STFT), a wavelet transform, a polyphase filterbank, a multi rate filterbank, a quadrature mirror filterbank, a warped filterbank, an auditory-inspired filterbank, etc.

A non-negative matrix factorization algorithm typically consists of a set of update rules derived by minimizing a distance measure between $\mathbf{V}_m$ and $\mathbf{W}_m\mathbf{H}_m$, which is sometimes formulated utilizing some underlying assumptions or modeling of the source signal. Such an algorithm may produce upon convergence a matrix product that approximates the original matrix $V_m$ as in equation (1).

$$\mathbf{V}_m \approx \hat{\mathbf{V}}_m = \mathbf{W}_m\mathbf{H}_m \qquad (8)$$

The matrix $\mathbf{W}_m$ has size FxK and the matrix $\mathbf{H}_m$ has size KxT, where **K** is the rank of the approximation (or the number of components) and typically K<<FT. Each component may correspond to any kind of signal including but not limited to a source signal, a combination of source signals, a part of a source signal, a residual signal. After estimating the matrices $\mathbf{W}_m$ and $\mathbf{H}_m$, each Fx1 column $\mathbf{w}_{j,m}$ of the matrix $\mathbf{W}_m$, can be combined with a corresponding 1xT row $\mathbf{h}_{j,m}$T of matrix $\mathbf{H}_m$ and thus a component mask $\mathbf{A}_{j,m}$ can be obtained

$$\mathbf{A}_{j,m} = \mathbf{w}_{j,m}\mathbf{h}_{j,m}^{T} \qquad (9)$$

When applied to the original matrix $\mathbf{V}_m$, this mask may produce a component signal $z_{j,m}(k)$ that corresponds to parts or combinations of signals present in the source signal. There are many ways of applying the mask $\mathbf{A}_{j,m}$ and they are all in the scope of the present invention. In a particular embodiment, the real-valued mask $\mathbf{A}_{j,m}$ could be directly applied to the complex-valued matrix $\mathbf{X}_m$, that may contain the time-frequency transformation of $x_m(k)$ as in (3)

$$Z_{j,m} = A_{j,m} \circ X_m \qquad (10)$$

where o is the Hadamart product. In this embodiment, applying an inverse time-frequency transform on $Z_{j,m}$ produces the component signals $z_{j,m}(k)$.

In many applications, multiple source signals are present (i.e. multiple signals $x_m(k)$ with m = 1, 2, ... M) and therefore multichannel information is available. In order to exploit such multichannel information, non-negative tensor factorization (NTF) methods can be also applied (see Section 1.5 in A. Cichocki, R. Zdunek, A.H. Phan, S.-I. Amari, "Nonnegative Matrix and Tensor Factorization: Applications to Exploratory Multi-way Data Analysis and Blind Source Separation", John Wiley & Sons, 2009). Alternatively, appropriate tensor unfolding methods (see Section 1.4.3 in A. Cichocki, R. Zdunek, A.H. Phan, S.-I. Amari, "Nonnegative Matrix and Tensor Factorization: Applications to Exploratory Multi-way Data Analysis and Blind Source Separation", John Wiley & Sons, 2009) will transform the multichannel tensors to a matrix and enable the use of NMF methods. All of the above decomposition methods are in the scope of the present invention. In order to ensure the convergence of NMF to a meaningful factorization that can provide useful component signals, a number of training techniques have been proposed. In the context of NMF, training typically consists of estimating the values of matrix $W_m$, and it is sometimes referred to as supervised or semi-supervised NMF.

In an exemplary embodiment of the present application, a training scheme is applied based on the concept of *training sequences.* A training sequence $\hat{s}_m(k)$ is herein defined as a signal that is related to one or more of the source signals (including their intrinsic parts). For example, a training sequence can consist of a sequence of model signals $s'_{i,m}(k)$. A model signal may be any signal and a training sequence may consist of one or more model signals. In some embodiments, a model signal can be an instance of one or more of the source signals (such signals may be captured in isolation), a signal that is similar to an instance of one or more of source signals, any combination of signals similar to an instance of one or more of the source signals, etc. In the preceding, a source signal is considered the source signal itself or one or more of the intrinsic parts of the source signal. In specific embodiments, a training sequence contains model signals that approximate in some way the signal that we wish to extract from the source signal under processing. In particular embodiments, a model signal may be convolved with shaping filters $g_i(k)$ which may be designed to change and control the overall amplitude, amplitude envelope and spectral shape of the model signal or any combination of mathematical or physical properties of the model signal. The model signals may have a length of $L_t$ samples and there may be R model signals in a training sequence, making the length of the total training sequence equal to $L_t R$. In particular embodiments, the training sequence can be described as in equation (4):

$$\hat{s}_m(k) = \sum_{i=0}^{R-1} \left[ g_i(k) * s'_{i,m}(k) \right] B(k; iL_t, iL_t + L_t - 1) \qquad (11)$$

where B(x; a, b) is the boxcar function given by:

$$B(x; a, b) = \begin{cases} 0 & \text{if } x < a \text{ and } x > b \\ 1 & \text{if } a \leq x \leq b \end{cases} \qquad (12)$$

In an exemplary embodiment, a new non-negative matrix $\hat{S}_m$ is created from the signal $\hat{s}_m(k)$ by applying the same time-frequency transformation as for $x_m(k)$ and is appended to $V_m$ as

$$\bar{V}_m = \left[ \; \hat{S}_m \; \vdots \; V_m \; \vdots \; \hat{S}_m \; \right] \qquad (13)$$

In specific embodiments, a matrix $\hat{S}_m$ can be appended only on the left side or only on the right side or on both sides of the original matrix $V_m$, as shown in equation 6. This illustrates that the training sequence is combined with the source signal. In other embodiments, the matrix $V_m$ can be split in any number of sub-matrices and these sub-matrices can be combined with any number of matrices $\hat{S}_m$, forming an extended matrix $\bar{V}_m$. After this training step, any decomposition method of choice can be applied to the extended matrix $\bar{V}_m$. If multiple source signals are processed simultaneously in a NTF or tensor unfolded NMF scheme, the training sequences for each source signal may or may not overlap in time. In other embodiments, when for some signals a training sequence is not formulated, the matrix $\mathbf{V}_m$ may be appended with zeros or a low amplitude noise signal with a predefined constant or any random signal or any other signal. Note that embodiments of the present application are relevant for any number of source signals and any number of desired output signals.

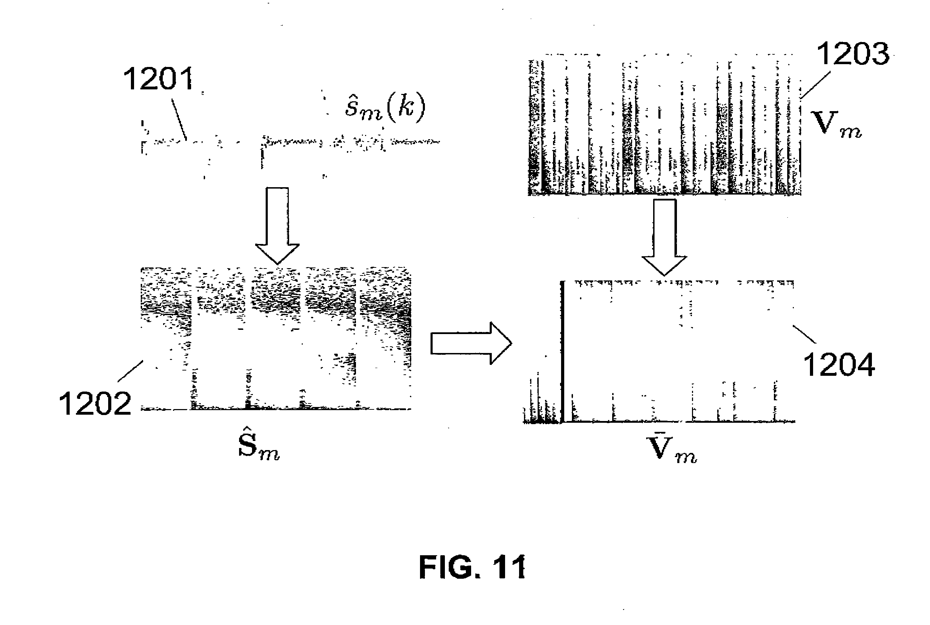

An example illustration of a training sequence is presented in FIG 11. In this example, a training sequence $\hat{s}_m(k)$ **1201** is created and transformed to the time-frequency domain through a short-time Fourier transform to create a spectrogram $\hat{\mathbf{S}}_m$ **1202**. Then, the spectrogram of the training sequence $\hat{\mathbf{S}}_m$ is appended to the beginning of an original spectrogram $\mathbf{V}_m$ **1203,** in order to create an extended spectrogram $\overline{V}_m$ **1204.** The extended spectrogram **1204** can be used in order to perform decomposition (for example NMF), instead of the original spectrogram **1203.**

Another aspect that is typically overlooked in decomposition methods is the initialization of the weight matrix $\mathbf{H}_m$. Typically this matrix can be initialized to random, non-negative values. However, by taking into account that in many applications, NMF methods operate in a multichannel environment, useful information can be extracted in order to initialize $\mathbf{H}_m$ in a more meaningful way. In a particular embodiment, an *energy ratio* between a source signal and other source signals is defined and used for initialization of $\mathbf{H}_m$.

When analyzing a source signal into frames of length $L_f$ with hop size $L_h$ and an analysis window $w(k)$ we can express the $\kappa$-th frame as a vector

$$ x_m(\kappa) = [x_m(\kappa L_h)w(0) \; x_m(\kappa L_h + 1)w(1) \; \cdots \; x_m(\kappa L_h + L_f - 1)w(L_f - 1)]^T \qquad (14) $$

and the energy of the $\kappa$-th frame of the m-th source signal is given as

$$ \mathcal{E}\left[\mathbf{x}_m(\kappa)\right] = \frac{1}{L_f}\|\mathbf{x}_m(\kappa)\|^2 \qquad (15) $$

The energy ratio for the m-th source signal is given by

$$ ER_m(\kappa) = \frac{\mathcal{E}\left[\mathbf{x}_m(\kappa)\right]}{\sum_{\substack{i=1 \\ i \neq m}}^{M} \mathcal{E}\left[\mathbf{x}_m(\kappa)\right]} \qquad (16) $$

The values of the energy ratio $ER_m(\kappa)$ can be arranged as a 1xT row vector and the M vectors can be arranged into an MxT matrix $\hat{\mathbf{H}}_m$. If K=M then this matrix can be used as the initialization value of $\mathbf{H}_m$. If K>M, this matrix can be appended with a (K-M)xT randomly initialized matrix or with any other relevant matrix. If K<M, only some of rows of $\hat{\mathbf{H}}_m$ can be used.

In general, the energy ratio can be calculated from the original source signals as described earlier or from any modified version of the source signals. In another embodiment, the energy ratios can be calculated from filtered versions of the original signals. In this case bandpass filters may be used and they may be sharp and centered around a characteristic frequency of the main signal found in each source signal. This is especially useful in cases where such frequencies differ significantly for various source signals, One way to estimate a characteristic frequency of a source signal is to find a frequency bin with the maximum magnitude from an averaged spectrogram of the sources as in:

$$ \omega_m^c = \operatorname*{argmax}_{\omega}\left[\frac{1}{T}\sum_{\kappa=1}^{T}|X_m(\kappa,\omega)|\right] \qquad (17) $$

where $\omega$ is the frequency index. A bandpass filter can be designed and centered around $\omega_m{}^c$. The filter can be IIR, FIR, or any other type of filter and it can be designed using any digital filter design method. Each source signal can be filtered with the corresponding band pass filter and then the energy ratios can be calculated.

In other embodiments, the energy ratio can be calculated in any domain including but not limited to the time-domain for each frame $\kappa$, the frequency domain, the time-frequency domain, etc. In this case $ER_m(\kappa)$ can be given by

$$ER_m(\kappa) = f\left(ER_m(\kappa,\omega)\right) \qquad (18)$$

where f(.) is a suitable function that calculates a single value of the energy ratio for the $\kappa$-th frame by an appropriate combination of the values $ER_m(\kappa, \omega)$. In specific embodiments, said function could choose the value of $ER_m(\kappa, (\omega_m{}^c)$ or the maximum value for all $\omega$, or the mean value for all $\omega$, etc. In other embodiments, the power ratio or other relevant metrics can be used instead of the energy ratio.

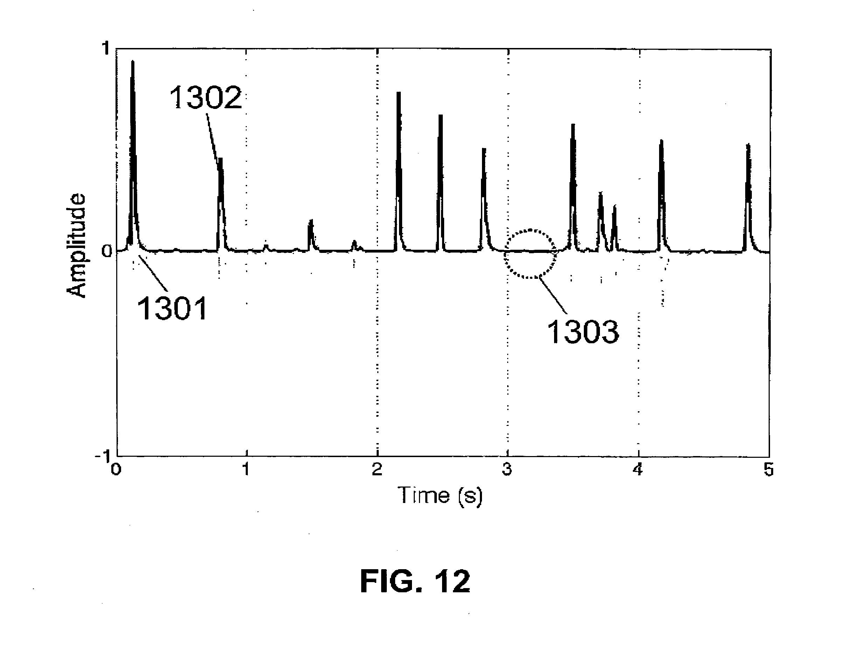

FIG. 12 presents an example where a source signal 301 and an energy ratio are each plotted as functions (amplitude vs. time) 1302. The energy ratio has been calculated and is shown for a multichannel environment. The energy ratio often tracks the envelope of the source signal. In specific signal parts (for example signal position 1303), however, the energy ratio has correctly identified an unwanted signal part and does not follow the envelope of the signal.

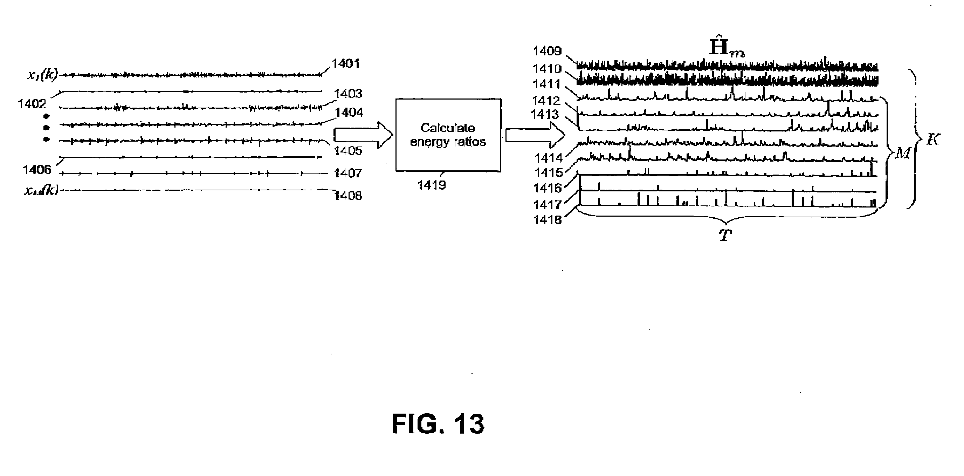

FIG 13 shows an exemplary embodiment of the present application where the energy ratio is calculated from M source signals $x_1(k)$ to $x_M(k)$ that can be analyzed in T frames and used to initialize a weight matrix $\hat{H}_m$ of K rows. In this specific embodiment there are 8 source signals 1401, 1402, v403, v404, 1405, 1406, 1407 and 1408. Using the 8 source signals the energy ratios are calculated 419 and used to initialize 8 rows of the matrix $\hat{H}_m$ 1411, 1412, 1413, 1414, 1415, 1416, 1417 and 1418. In this example, since the rows of matrix $\hat{H}_m$ are 10 (more than the source signals), the rows 109 and 1410 are initialized with random signals.

Using the initialization and training steps described above, a meaningful convergence of the decomposition can be achieved. After convergence, the component masks are extracted and applied to the original matrix in order to produce a set of K component signals $z_{j,m}(k)$ for each source signal $x_m(k)$. In a particular embodiment, said component signals are automatically sorted according to their similarity to a reference signal $r_m(k)$. First, an appropriate reference signal $r_m(k)$ must be chosen which can be different according to the processing application and can be any signal including but not limited to the source signal itself (which also includes one or many of its inherent parts), a filtered version of the source signal, an estimate of the source signal, etc. Then the reference signal is analyzed in frames and we define the set

$$\Omega_m = \left\{\kappa : \mathcal{E}\left[r_m(\kappa)\right] > E_T\right\} \qquad (19)$$

which indicates the frames of the reference signal that have significant energy, that is their energy is above a threshold $E_T$. We calculate the cosine similarity measure

$$c_{j,m}(\kappa) = \frac{r_m(\kappa) \cdot z_{j,m}(\kappa)}{\|r_m(\kappa)\|\|z_{j,m}(\kappa)\|}, \quad \kappa \in \Omega_m \text{ and } j = 1,\ldots,K \qquad (20)$$

and then calculate

$$c'_{j,m} = f\left(c_{j,m}(\kappa)\right) \qquad (21)$$

In particular embodiments, f(.) can be any suitable function such as max, mean, median, etc. The component signals $z_{j,m}(k)$ that are produced by the decomposition process can now be sorted according to a similarity measure, i.e. a function that measures the similarity between a subset of frames of $r_m(k)$ and $z_{j,m}(k)$. A specific similarity measure is shown in equation (13), however any function or relationship that compares the component signals to the reference signals can be used. An ordering or function applied to the similarity measure $c_{j,m}(k)$ then results in $c'_{j,m}$. A high value indicates significant similarity between $r_m(k)$ and $z_{j,m}(k)$ while a low value indicates the opposite. In particular embodiments, clustering techniques can be used instead of using a similarity measure, in order to group relevant components together, in such a way that components in the same group (called cluster) are more similar (in some sense or another) to each other than to those in other groups (clusters). In particular embodiment, any clustering technique can be applied to a subset of component frames (for example those that are bigger than a threshold $E_T$), including but not limited to connectivity based clustering (hierarchical clustering), centroid-based clustering, distribution-based clustering, density-based clustering, etc.

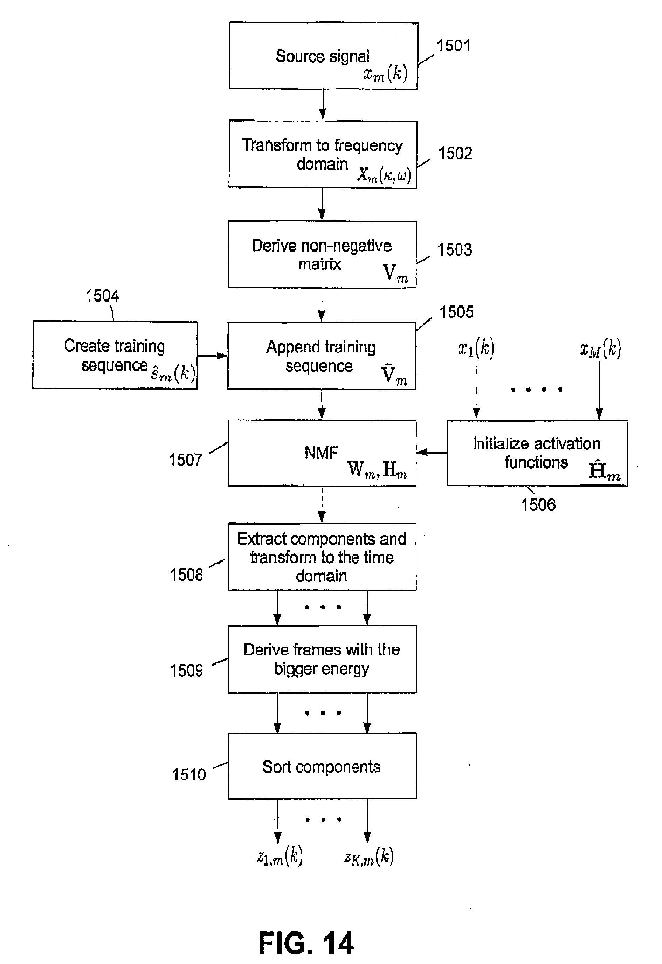

FIG 14 presents a block diagram where exemplary embodiments of the present application are shown. A time domain source signal v **501** is transformed in the frequency **1502** domain using any appropriate transform, in order to produce the non-negative matrix $\mathbf{V}_m$ **1503**. Then a training sequence is created **1504** and after any appropriate transform it is appended to the original non-negative matrix **1505**. In addition, the source signals are used to derive the energy ratios and initialize the weight matrix **1506**. Using the above initialized matrices, NMF is performed on $\overline{V}_m$ **1507**. After NMF, the signal components are extracted **1508** and after calculating the energy of the frames, a subset of the frames with the biggest energy is derived **1509** and used for the sorting procedure **1510.**

In particular embodiments, human input can be used in order to produce desired output signals. After automatic or manual sorting and/or categorization, signal components are typically in a meaningful order. Therefore, a human user can select which components from a predefined hierarchy will form the desired output. In a particular embodiment, K components are sorted using any sorting and/or categorization technique. A human user can define a gain $\mu$ for each one of the components. The user can define the gain explicitly or intuitively. The gain can take the value 0, therefore some components may not be selected. Any desired output $y_m(k)$ can be extracted as any combination of components $z_{j,m}(k)$:

$$y_m(k) = \sum_{j=1}^{K} \mu_j(k) z_{j,m}(k) \qquad (22)$$

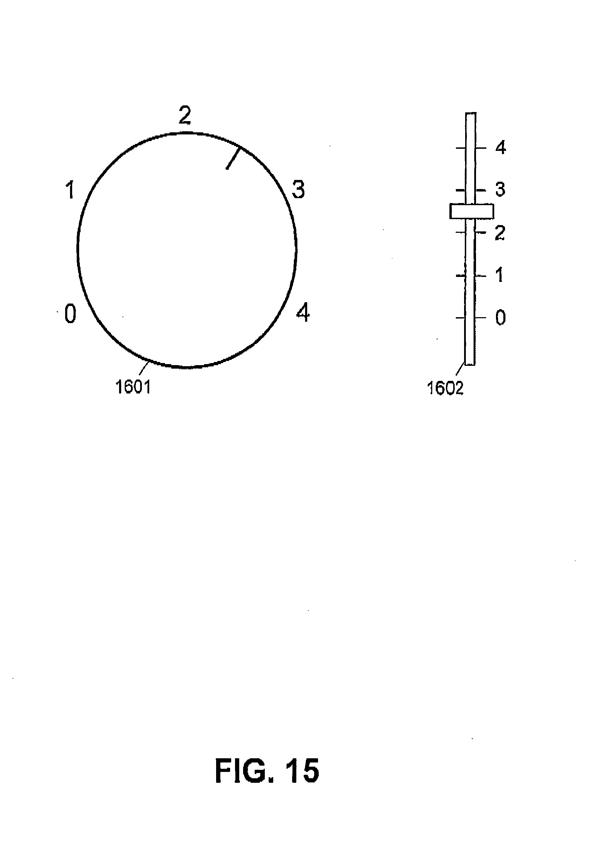

In FIG 15 two exemplary user interfaces are illustrated, in accordance with embodiments of the present application, in the forms of a knob **1601** and a slider **1602.** Such elements can be implemented either in hardware or in software.

In one particular example, the total number of components is 4. When the knob/slider is in position 0, the output will be zeroed, when it is in position 1 only the first component will be selected and when it is in position 4 all four components will be selected. When the user has set the value of the knob and/or slider at 2.5 and assuming that a simple linear addition is performed, the output will be given by:

$$y_m(k) = z_{1,m}(k) + z_{2,m}(k) + 0.5z_{3,m}(k) \qquad (23)$$

In another embodiment, a logarithmic addition can be performed or any other gain for each component can be derived from the user input.

Using similar interface elements, different mapping strategies regarding the component selection and mixture can be also followed. In another embodiment, in knob/slider position 0 of FIG 15, the output will be the sum of all components, in position 1 components the output will be the sum of components 1, 2 and 3 and in position 4 the output will be zeroed. Therefore, assuming a linear addition scheme for this example, putting the knob/slider at position 2.5 will produce an output given by:

$$y_m(k) = z_{1,m}(k) + 0.5z_{2,m}(k) \qquad (24)$$

Again, the strategy and the gain for each component can be defined through any equation from the user-defined value of the slider/ knob.

In another embodiment, source signals of the present invention can be microphone signals in audio applications. Consider N simultaneously active signals $s_n(k)$ (i.e. sound sources) and M microphones set to capture those signals, producing the source signals $x_m(k)$. In particular embodiments, each sound source signal may correspond to the sound of any type of musical instrument such as a multichannel drums recording or human voice. Each source signal can be described as

$$x_m(k) = \sum_{n=1}^{N} [\rho_s(k, \theta_{mn}) * s_n(k)] * [\rho_c(k, \theta_{mn}) * h_{mn}(k)] \qquad (25)$$

for m=1,...,M. $\rho_s(k, \theta_{mn})$ is a filter that takes into account the source directivity, $\rho_c(k, \theta_{mn})$ is a filter that describes the microphone directivity, $h_{mn}(k)$ is the impulse response of the acoustic environment between the n-th sound source and m-th microphone and * denotes convolution. In most audio applications each sound source is ideally captured by one corresponding microphone. However, in practice each microphone picks up the sound of the source of interest but also the sound of all other sources and hence equation (18) can be written as

$$x_m(k) = [\rho_s(k, \theta_{mm}) * s_m(k)] * [\rho_c(k, \theta_{mm}) * h_{mm}(k)] + \sum_{\substack{n=1 \\ n \neq m}}^{N} [\rho_s(k, \theta_{mn}) * s_n(k)] * [\rho_c(k, \theta_{mn}) * h_{mn}(k)] \qquad (26)$$

To simplify equation (19) we define the direct source signal as

$$\bar{s}_m(k) = [\rho_s(k, \theta_{mm}) * s_m(k)] * [\rho_c(k, \theta_{mm}) * h_{mm}(k)] \qquad (27)$$

Note that here m=n and the source signal is the one that should ideally be captured by the corresponding microphone. We also define the leakage source signal as

$$\bar{s}_{n,m}(k) = [\rho_s(k, \theta_{mn}) * s_n(k)] * [\rho_c(k, \theta_{mn}) * h_{mn}(k)] \qquad (28)$$

In this case m≠n and the source signal is the result of a source that does not correspond to this microphone and ideally should not be captured. Using equations (20) and (21), equation (19) can be written as

$$x_m(k) = \bar{s}_m(k) + \sum_{\substack{n=1 \\ n \neq m}}^{N} \bar{s}_{n,m}(k) \qquad (29)$$

There are a number of audio applications that would greatly benefit from a signal processing method that would extract the direct source signal $\bar{s}_m(k)$ from the source signal $x_m(k)$ and remove the interfering leakage sources $\bar{s}_{n,m}(k)$.

One way to achieve this is to perform NMF on an appropriate representation of $x_m(k)$ according to embodiments of the present application. When the original mixture is captured in the time domain, the non-negative matrix $V_m$ can be derived through any signal transformation. For example, the signal can be transformed in the time-frequency domain using any relevant technique such as a short-time Fourier transform (STFT), a wavelet transform) a polyphase filterbank, a multi rate filterbank, a quadrature mirror filterbank, a warped filterbank, an auditory-inspired filterbank, etc. Each one of the above transforms will result in a specific time-frequency resolution that will change the processing accordingly. All embodiments of the present application can use any available time-frequency transform or any other transform that ensures a non-negative matrix $V_m$.

By appropriately transforming $x_m(k)$, the signal $X_m(\kappa, \omega)$ can be obtained where $\kappa=0, ..., T-1$ is the frame index and $\omega=0, ..., F-1$ is the discrete frequency bin index. From the complex-valued signal $X_m(\kappa, \omega)$ we can obtain the magnitude $V_m(\kappa, \omega)$. The values of $V_m(\kappa, \omega)$ form the magnitude spectrogram of the time-domain signal $x_m(k)$. This spectrogram can be arranged as a matrix $V_m$ of size FxT. Note that where the term spectrogram is used, it does not only refer to the magnitude spectrogram but any version of the spectrogram that can be derived from

$$V_m(\kappa, \omega) = f\left(|X_m(\kappa, \omega)|^{\beta}\right) \qquad (30)$$

where f(.) can be any suitable function (for example the logarithm function). As seen from the previous analysis, all embodiments of the present application are relevant to sound processing in single or multichannel scenarios.

While the above-described flowcharts have been discussed in relation to a particular sequence of events, it should be appreciated that changes to this sequence can occur without materially effecting the operation of the invention. Additionally, the exemplary techniques illustrated herein are not limited to the specifically illustrated embodiments but can also be utilized and combined with the other exemplary embodiments and each described feature is individually and separately claimable.

Additionally, the systems, methods and protocols of this invention can be implemented on a special purpose computer, a programmed micro-processor or microcontroller and peripheral integrated circuit element(s), an ASIC or other integrated circuit, a digital signal processor, a hard-wired electronic or logic circuit such as discrete element circuit, a programmable logic device such as PLD, PLA, FPGA, PAL, a modem, a transmitter/receiver, any comparable means, or the like. In general, any device capable of implementing a state machine that is in turn capable of implementing the methodology illustrated herein can be used to implement the various communication methods, protocols and techniques according to this invention.

Furthermore, the disclosed methods may be readily implemented in software using object or object-oriented software development environments that provide portable source code that can be used on a variety of computer or workstation platforms. Alternatively the disclosed methods may be readily implemented in software on an embedded processor, a micro-processor or a digital signal processor. The implementation may utilize either fixed-point or floating point operations or both. In the case of fixed point operations, approximations may be used for certain mathematical operations such as logarithms, exponentials, etc. Alternatively, the disclosed system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The systems and methods illustrated herein can be readily implemented in hardware and/or software using any known or later developed systems or structures, devices and/or software by those of ordinary skill in the applicable art from the functional description provided herein and with a general basic knowledge of the audio processing arts.

Moreover, the disclosed methods may be readily implemented in software that can be stored on a storage medium, executed on programmed general-purpose computer with the cooperation of a controller and memory, a special purpose computer, a microprocessor, or the like. In these instances, the systems and methods of this invention can be implemented as program embedded on personal computer such as an applet, JAVA.RTM. or CGI script, as a resource residing on a server or computer workstation, as a routine embedded in a dedicated system or system component, or the like. The system can also be implemented by physically incorporating the system and/or method into a software and/or hardware system, such as the hardware and software systems of an electronic device.

It is therefore apparent that there has been provided, in accordance with the present invention, systems and methods for improved signal decomposition in electronic devices. While this invention has been described in conjunction with a number of embodiments, it is evident that many alternatives, modifications and variations would be or are apparent to those of ordinary skill in the applicable arts. Accordingly, it is intended to embrace all such alternatives, modifications, equivalents and variations that are within the spirit and scope of this invention.

Further aspects relate to:

1. A method of digital signal decomposition of a source signal comprising:

utilizing a training sequence to create a first digital signal;
processing said first digital signal using a signal transformation to create a second digital signal;
applying a decomposition technique to a third digital signal that is related to said second signal and said source signal.

2. The method of aspect 1 where said source signal is single channel or binaural or multichannel audio signal.

3. The method of aspect 1 where said training sequence is derived from one or more model signals.

4. The method of aspect 1 where said third signal is a concatenation of signals derived from said training sequence and said source signal.

5. The method of aspect 1 wherein said decomposition technique utilizes one or more of non-negative matrix factorization, non-negative tensor factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, or tucker decomposition.

6. The method of aspect 3 where one or more of the model signals are related to a desired decomposition output.

7. The method of aspect 3 where said model signals are filtered.

8. The method of aspect 4 where said model signals are filtered.

9. A method of decomposing a plurality of digital signals comprising:

determining a ratio of a first function of a first of the plurality of digital signals divided by a second function of at least two other of the plurality of digital signals;
using said ratio for an initialization of a decomposition of the plurality of digital signals.

10. The method of aspect 9 where said digital signals are one or more of binaural or multichannel audio signals.

11. The method of aspect 9 where said decomposition is performed by utilizing one or more of non-negative matrix factorization, non-negative tensor factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, or tucker decomposition.

12. The method of aspect 9 where said first and second functions are calculated from one or more filtered versions of said digital signals.

13. The method of aspect 9 where said first and second functions are calculated in one or more of the time domain, the frequency domain, the time-frequency domain.

14. The method of aspect 9 where said first and second functions are calculated using one or more of energy, power, root mean square, geometric mean, arithmetic mean, euclidean norm, taxicab norm, or $L^p$ norm.

15. A method for combining parts of a decomposed digital signal comprising:

sorting said parts using a similarity measure into a sequence of sorted parts;
obtaining one or more values from a user interface;
combining said sorted parts using said one or more values.

16. The method of aspect 15 where said digital signals are one or more of single channel or binaural or multichannel audio signals.

17. The method of aspect 15 where said user interface is a knob, a slider or a combination thereof.

18. The method of aspect 15 where said user interface is implemented in software or in hardware.

19. The method of aspect 15 where said sorted parts are added according to a user-defined gain.

20. The method of aspect 15 where said sorted parts are combined sequentially.

**Claims**

1. A method of processing or mixing or enhancing signal mixtures comprising:

identifying one or more source signals in said signal mixtures;
detecting similar source signals on said mixture signals;
processing or mixing or enhancing one or more of said source signals as a group.

2. The method of claim 1, where said signal mixtures are single channel or binaural or multichannel audio signal mixtures.

3. The method of claim 1, where said signal mixtures are captured via a microphone.

**4.** The method of claim 1, where said source signals are extracted via any signal decomposition method.

**5.** The method of claim 4, wherein said decomposition method utilizes one or more of non-negative matrix factorization, non-negative tensor factorization, independent component analysis, principal component analysis, singular value decomposition, dependent component analysis, low-complexity coding and decoding, stationary subspace analysis, common spatial pattern, empirical mode decomposition, tensor decomposition, canonical polyadic decomposition, higher-order singular value decomposition, or tucker decomposition.

**6.** The method of claim 1, where said source signals are combined with said signal mixtures

**7.** A method for selecting parts of decomposed digital signals comprising:

deriving a first similarity measure between said signal parts and said digital signals;
selecting one or more said signal parts based on said first similarity measure;
deriving a second similarity measure between said selected signal parts and said parts of decomposed signals;
selecting one or more said parts of decomposed signals based on said second similarity measure.

**8.** The method of claim 7, where said digital signals are single channel or binaural or multichannel audio signals.

**9.** The method of claim 7, where one or more of said digital signals are microphone signals.

**10.** The method of claim 7, where said first and second similarity measures are calculated from one or more filtered versions of said digital signals.

**11.** The method of claim 7, where said first and second similarity measures are calculated in one or more of the time domain, the frequency domain, the time-frequency domain.

**12.** A non-transitory computer-readable information storage media, having stored thereon instructions, that when executed, cause to be performed a method for processing or mixing or enhancing signal mixtures comprising:

identifying one or more source signals in said signal mixtures;
detecting similar source signals on said mixture signals;
processing or mixing or enhancing one or more of said source signals as a group.

**13.** One or more means for performing the steps of claim 1.

**14.** One or more means for performing the steps of claim 7.

FIG. 1

**201**     **204**     **206**   **207**      **214**     **218 219**

**205**     **217**

| Signal mixture 1 $s_1(k)$ | Signal decomposition | | Signal component $K_1$ Signal component 2 Signal component 1 $z_{1,1}(k)$ | Select and combine relevant components | Output signal $L_1$ Output signal 2 Output signal 1 $y_{1,1}(k)$ |

| Signal mixture 2 $s_2(k)$ | | Signal component $K_2$ Signal component 2 Signal component 1 $z_{1,2}(k)$ | Select and combine relevant components | Output signal $L_2$ Output signal 2 Output signal 1 $y_{1,2}(k)$ |

**202**     **208**     **209**   **210**     **215**     **220**   **221**   **222**

**213**

| Signal mixture N $s_N(k)$ | | Signal component $K_N$ Signal component 2 Signal component 1 $z_{1,N}(k)$ | Select and combine relevant components | Output signal $L_N$ Output Signal 2 Output signal 1 $y_{1,N}(k)$ |

**203**     **211**   **212**     **216**     **223**   **224**   **225**

**FIG. 2**

301

**Microphone or other signals**

302

**Signal decomposition**

303

| Main isolated source signals from close microphones | Additional isolated source signals from other microphones | Source signal combinations | Room ambience and other effects |

304    305    306

**Time alignement (optional)**

307

**Mixing**

308

**FIG. 3**

EP 2 940 687 A1

401

402

| Microphone or other signals | → | Signal decomposition and creation of output signals | → | Save output signals/ decomposition info in a file |

403

404

Standalone application

Load saved file → Map output signals to DAW tracks → Playback/process output signals → Mix

DAW  406        407        408        409

405

**FIG. 4**

**FIG. 5**

**FIG. 6**

# FIG. 7

Sound source 1  701
Sound source 2  702
Sound source M  703

704  705  706  707

Signal decomposition  708

709

Sound source 1
Sound source 2
Sound source 3
...
Sound source M

710

Sound source 2
Sound source 3
...
Sound source M

Sound source 1
Sound source 2
...
Sound source M

711

Sound source 1
Sound source 2
...
Sound source M-1

Sound source M

712

Sound source 1
Sound source 2
...
Sound source M

Process selected signal parts  713

**FIG. 8**

FIG. 9

**FIG. 10**

EP 2 940 687 A1

1201

$\hat{s}_m(k)$

1203

$\mathbf{V}_m$

1202

$\hat{\mathbf{S}}_m$

1204

$\bar{\mathbf{V}}_m$

FIG. 11

**FIG. 12**

FIG. 13

EP 2 940 687 A1

Source signal $x_m(k)$ — 1501

Transform to frequency domain $X_m(\kappa,\omega)$ — 1502

Derive non-negative matrix $\mathbf{V}_m$ — 1503

1504 — Create training sequence $\hat{s}_m(k)$

Append training sequence $\bar{\mathbf{V}}_m$ — 1505

$x_1(k)$ .... $x_M(k)$

1507 — NMF $\mathbf{W}_m, \mathbf{H}_m$

Initialize activation functions $\hat{\mathbf{H}}_m$ — 1506

1508 — Extract components and transform to the time domain

1509 — Derive frames with the bigger energy

1510 — Sort components

$z_{1,m}(k)$ .... $z_{K,m}(k)$

**FIG. 14**

**FIG. 15**

**EUROPEAN SEARCH REPORT**

Europäisches
Patentamt
European
Patent Office
Office européen
des brevets

Application Number

EP 15 00 1261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/111313 A1 (NAMBA RYUICHI [JP] ET AL) 6 May 2010 (2010-05-06)<br>* figure 1 *<br>* paragraphs [0038] - [0042], [0084] *<br>----- | 1-6,12, 13 | INV.<br>G10L21/0272<br>H04R3/00<br>H04S7/00<br>G10L19/008 |
| X | WO 2013/030134 A1 (UNIV BELFAST [GB]; MING JI [GB]; SRINIVASAN RAMJI [GB]; CROOKES DANIEL) 7 March 2013 (2013-03-07)<br>* figure 3 *<br>* page 10, line 24 - page 11, line 10 *<br>* claim 16 *<br>----- | 7-11,14 | |

TECHNICAL FIELDS
SEARCHED    (IPC)

G10L
H04R
H04S

The present search report has been drawn up for all claims

| Place of search | Date of completion of the search | Examiner |
|---|---|---|
| Munich | 27 August 2015 | Chétry, Nicolas |

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 15 00 1261

The Search Division considers that the present European patent application does not comply with the requirements of unity of invention and relates to several inventions or groups of inventions, namely:

1. claims: 1-14

    Audio signal processing

1.1. claims: 1-6, 12, 13

    A method for processing source signals after source separation.

1.2. claims: 7-11, 14

    A method for selecting parts of a decomposed digital signal.
    ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 15 00 1261

This annex lists the patent family members relating to the patent documents cited in  the above-mentioned European search report.
The members are as contained in the European Patent Office EDP file on
The European Patent Office is in no way liable for these particulars which are merely given for the purpose of information.

27-08-2015

| Patent document cited in search report | | Publication date | Patent family member(s) | | Publication date |
|---|---|---|---|---|---|
| US 2010111313 | A1 | 06-05-2010 | CN | 101740038 A | 16-06-2010 |
| | | | JP | 4952698 B2 | 13-06-2012 |
| | | | JP | 2010112994 A | 20-05-2010 |
| | | | US | 2010111313 A1 | 06-05-2010 |
| WO 2013030134 | A1 | 07-03-2013 | NONE | | |

For more details about this annex : see Official Journal of the European Patent Office, No. 12/82

EP 2 940 687 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 14011981 B
- US 20150066486 A1
- US 011981 A

### Non-patent literature cited in the description

- **SCHMIDT, M. ; OLSSON, R.** Single-Channel Speech Separation using Sparse Non-Negative Matrix Factorization. *Proceedings of Interspeech,* 2006, 2614-2617
- **WILSON, K. W. ; RAJ, B. ; SMARAGDIS, P. ; DIVAKARAN, A.** Speech denoising using nonnegative matrix factorization with priors. *IEEE International Conference on Acoustics, Speech and Signal Processing,* 2008, 4029-4032
- **FREDERIC, J.** Examination of Initialization Techniques for Nonnegative Matrix Factorization. *Mathematics Theses,* 2008
- **A. CICHOCKI ; R. ZDUNEK ; A.H. PHAN ; S.-I. AMARI.** Nonnegative Matrix and Tensor Factorization: Applications to Exploratory Multi-way Data Analysis and Blind Source Separation. John Wiley & Sons, 2009